# EUROPEAN PATENT APPLICATION

(11) **EP 4 395 070 A1**
(43) Date of publication of application: **03.07.2024**
(21) Application number: 23218452.3
(22) Date of filing: 20.12.2023
(51) Int. Cl.: H01Q 1/06, B60Q 1/00, H01Q 1/32, H01Q 1/42, H01Q 1/44

(54) **INTEGRATED VEHICLE ANTENNA INDICATOR SYSTEM**

(30) Priority: 30.12.2022 US 202263477885 P
(71) Applicant: Aptiv Technologies AG, 8200 Schaffhausen (CH)
(72) Inventor: Suda, Timothy Alan, Avon, IN, 46123 (US)
(74) Representative: Manitz Finsterwald Patent- und Rechtsanwaltspartnerschaft mbB

(57) **Abstract**

This document describes an integrated vehicle antenna and indicator system. As one example, a recognizable feature of an antenna housing (e.g., a ridge on a shark fin antenna housing) is replaced with an indicator element and transparent cover that are shaped and contoured to preserve the original shape of that recognizable feature of the antenna housing before being replaced. With an indicator element integrated in an antenna housing this way, visual notifications can be output from a highly visible and recognizable indicator mounting position on the vehicle. By outputting a light pattern near a recognizable feature of an external device, such as a shark fin antenna, a visible notification to convey information is provided in a way that does not detract from aesthetics of a vehicle design and is easily recognizable from outside the vehicle.

## Description

### CROSS-REFERENCE TO RELATED APPLICATION

This application claims the benefit and priority of U.S. Provisional Application No. 63/477,885, filed on December 30, 2022. The entire disclosure of the above application is incorporated herein by reference.

### FIELD

The present disclosure relates to integrated vehicle antenna indicator systems.

### BACKGROUND

Modern vehicles come equipped with various external devices, including indicator elements, sensors, and antennas, which are mounted on a vehicle exterior. Using antennas for signal processing or indicators to convey information about a vehicle state can be useful (e.g., flashing headlights when remote start occurs). Embedding these devices onto the vehicle exterior can be a challenge, especially without diminishing a vehicle's design appeal, safety, functionality, and/or performance. There are limited locations for placing antennas, indicators, and other such devices on a vehicle exterior, especially to decrease (e.g., for the antennas) or increase (e.g., for the indicators) their chances of being noticed from outside the vehicle.

### SUMMARY

This document describes an integrated vehicle antenna and indicator system. In one example, an integrated vehicle antenna and indicator system includes an indicator element configured to output different light patterns to visually indicate respective vehicle states, a housing, and a transparent cover. The housing includes a body portion configured to at least partially surround one or more antenna elements positioned on a vehicle exterior including walls of the body portion that are configured to enclose the antenna elements within a cavity formed between the walls and the vehicle exterior. Also, the housing includes a mechanical interface for the indicator element to maintain an indicator position located above the cavity that encloses the antenna elements. The transparent cover includes a transparent surface configured to attach to the body portion at body regions that surround the mechanical interface to seal the mechanical interface and the indicator element under the transparent cover.

In another example, a method includes forming the integrated vehicle antenna and indicator system on a vehicle. The method includes forming, using manufacturing equipment, a housing including forming a body portion shaped to at least partially surround one or more antenna elements positioned on a vehicle exterior including by forming walls to enclose the antenna elements within a cavity created by contact between the walls and the vehicle exterior, and forming a mechanical interface that maintain an indicator position located above the cavity. The method further includes forming a transparent cover to have a transparent surface that attaches to the body portion at body regions that surround the mechanical interface to seal the mechanical interface under the transparent cover, and installing, within the mechanical interface, an indicator element operable from the indicator position to output different light patterns that visually indicate respective vehicle states. The method further includes attaching the transparent cover to the body regions to seal the indicator element under the transparent surface.

Other examples include a method for using the integrated vehicle antenna and indicator system on a vehicle. The method includes outputting, by at least one vehicle processor, commands to an indicator interface of integrated vehicle antenna and indicator system to cause different light patterns as notifications of vehicle states determined for that time. In addition, or alternatively, the method may include transmitting or receiving, by the vehicle processor, signals at an antenna interface to the antenna elements protected by the integrated vehicle antenna and indicator system.

In some examples, a computing system may include a processor configured to perform these or any other example methods provided herein. A computer-readable storage medium, such as a non-transitory computer-readable media, may store instructions, which when executed, cause a processor to perform the steps of any of the example methods disclosed. A system can include these or other means for performing steps of any methods provided herein.

This Summary introduces simplified concepts related to an antenna enclosure and indicator system, which is further described in the Detailed Description with reference to the Drawings. This Summary is not intended to identify essential features of the claimed subject matter, nor is it intended to determine the scope of the claimed subject matter.

### BRIEF DESCRIPTION OF THE DRAWINGS

The details of one or more aspects of an integrated vehicle antenna and indicator system are described in this document with reference to the following figures. The same numbers are often used throughout the drawings to reference like features and components:
FIG. 1 illustrates an example environment in which an integrated vehicle antenna and indicator system can be implemented;
FIG. 2 illustrates an example configuration of a vehicle with an integrated vehicle antenna and indicator system;
FIGS. 3 and 4 illustrate isometric views of an example housing assembly for an integrated vehicle antenna and indicator system;
FIGS. 5 to 9 illustrate perspective views of an example housing assembly for an integrated vehicle antenna and indicator system;
FIGS. 10 and 11 illustrate exploded and isometric views of an integrated vehicle antenna and indicator system assembly;
FIG. 12 illustrates a flowchart of an example process for forming an integrated vehicle antenna and indicator system;
FIG. 13 illustrates a flowchart of an example process for using an integrated vehicle antenna and indicator system; and
FIGS. 14 and 15 illustrate different perspectives of visual notifications being output from a vehicle exterior using an integrated vehicle antenna and indicator system.

### DETAILED DESCRIPTION

### OVERVIEW

Modern vehicles come equipped with various external devices, including indicator elements, sensors, and antennas, which are mounted on a vehicle exterior. A communication antenna may be attached to a roof or hood to obtain an unobstructed view of satellites and/or terrestrial based radios (e.g., telecommunications towers, buildings, infrastructure). Sensors (e.g., radar, camera) can be distributed at different vehicle positions (e.g., roof, side panels, vehicle corners) for providing an instrument field of view of a road to facilitate driving. Lights and other illuminators can be positioned as indicator elements arranged about the vehicle to illuminate the road or to indicate expected or current movement of the vehicle. Using antennas for signal processing or indicators to convey information about a vehicle state can be useful (e.g., flashing headlights when remote start occurs). Embedding these devices onto the vehicle exterior can be a challenge, especially without diminishing a vehicle's design appeal, safety, functionality, and/or performance. There are limited locations for placing antennas, indicators, and other such devices on a vehicle exterior, especially to decrease (e.g., for the antennas) or increase (e.g., for the indicators) their chances of being noticed from outside the vehicle.

Several considerations may be made to select a location for integrating an external device onto a vehicle exterior. For example, the location can be selected for achieving correct device functionality, for achieving inter-device operability or minimizing interference with other vehicle systems. Given their size, orientation on the vehicle, material, and/or other factors, some external devices have recognizable features, which are difficult to hide or mask within a vehicle design; the external device location may be selected for diminishing an aesthetic impact of recognizable or distinguishing features. Even after careful placement and consideration of their location on the vehicle, some external devices can have recognizable features that still appear clearly from a vehicle profile or that otherwise stand out from other features of the vehicle. For example, a shark fin antenna is often noticeable from most any viewing angle, including from above, or at ground level from a pedestrian or vehicle passenger point of view. Its placement along or near a centerline of the vehicle roof can ensure an adequate line of sight between a vehicle communication unit (e.g., a radio, a satellite transceiver) and a target signal source (e.g., a satellite, an antenna tower, another vehicle). The preferred placement of the shark fin antenna, however, may also cause a noticeable protrusion in an otherwise smooth or substantially flat roof-line contour, which is preferred for aerodynamics and/or aesthetic appeal.

This document describes techniques and systems for an integrated vehicle antenna and indicator system. With advancements in lights, illumination devices, and other indicator element technology (e.g., light bars), there are new opportunities for integrating illuminators on different parts of a vehicle. The distinguishing external device features that are easily recognizable may be adapted as mounting locations for attaching indicator elements to the outside surface of the vehicle. This way, an illumination output from the indicator is quickly recognizable from many different viewing angles, a visual notification of a vehicle state or device information. Rather than hide a distinguishing feature of an external device, e.g., to maintain appeal with a vehicle design, an indicator (e.g., a light bar) can be integrated within that distinguishing feature to convey information in a more noticeable way. By integrating an indicator element in an antenna housing, a light pattern illuminated from that location when the vehicle is parked can be easily recognizable from outside the vehicle as conveying system information about a vehicle state. From the indicator, pedestrians or a driver is able to recognize the state of the vehicle from afar.

Various types of light patterns can be output from the indicator element to convey information. For instance, a person that approaches the vehicle can view a notification output from the indicator element (e.g., an illuminated light pattern) that has a particular color or animation. The notification provides an indication of vehicle state or vehicle status from outside the vehicle. Progress of a vehicle software download or update, an electrical vehicle recharge, a fuel tank refill, a remote start session, an over the air download, a remote unlock, or a temperature or climate control situation. Other system information may be output from the indicator element, such as an expected range for current battery or fuel levels, or a cabin environmental change (e.g., temperature) to alert about unsafe conditions for an unattended passenger or animal occupant detected inside the vehicle. To achieve different light patterns, the indicator element can vary a light intensity, a light color, a pulsing speed, or other animation according to many different permutations. This allows the information provided in the notification to be adapted for a current situation.

As one example of an integrated vehicle antenna and indicator system, a recognizable feature of an antenna housing (e.g., a ridge on a shark fin antenna housing) is replaced with an indicator element and transparent cover that are shaped and contoured to preserve the original shape of that recognizable feature of the antenna housing before being replaced. With an indicator element integrated in an antenna housing this way, visual notifications can be output from a highly visible and recognizable indicator mounting position on the vehicle. By outputting a light pattern near a recognizable feature of an external device, such as a shark fin antenna, a visible notification to convey information is provided in a way that does not detract from aesthetics of a vehicle design and is easily recognizable from outside the vehicle.

This example is just one example of the described integrated vehicle antenna and indicator system. This document describes other examples and implementations.

### OPERATING ENVIRONMENT

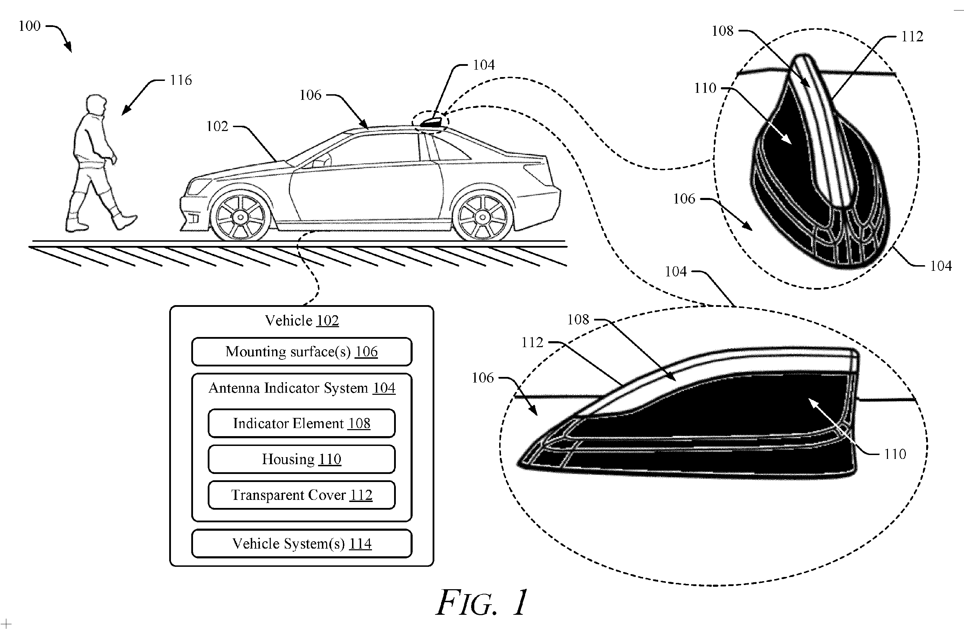

FIG. 1 illustrates an example environment 100, in which an integrated vehicle antenna and indicator system can be implemented. In the environment 100, a vehicle 102 is parked on a ground surface (e.g., adjacent to a road, in a parking lot, within a garage). Although illustrated as an automobile, the vehicle 102 can represent other types of vehicles with various capabilities. The vehicle 102 can be any motorized vehicle (e.g., a bus, a truck, a robot) that uses an energy source (e.g., electric, gas, liquid fuel, fuel cell) to move the vehicle 102, which, when stopped on the ground, may at times be within visibility of pedestrians or others in the vicinity. As such, the vehicle 102 may be an aircraft or watercraft that is stopped on a tarmac or moored at a dock. As depicted in the environment 100, the vehicle 102 parked within a viewing angle of a pedestrian 116 walking near the vehicle 102. The pedestrian 116 may be any person (e.g., a driver, a passenger, an observer, a crew member, a maintenance person, a bicyclist, a skateboarder, a scooter rider), animal (e.g., trained service dog), or device (e.g., a robot, a sensor, another vehicle) that is located outside the vehicle 102, and has a viewing angle (e.g., visible perspective, field of view) that includes the vehicle 102.

The vehicle 102 includes an integrated vehicle antenna and indicator system 104 (abbreviated herein as "system 104") that is attached to a vehicle exterior on a mounting surface 106 of the vehicle 102. The mounting surface 106 may include a roof portion of the vehicle 102, as is depicted in FIG. 1. The roof or roof panel is only one example of the mounting surface 106 on the vehicle 102 for attaching the system 104. Depending on application, the system 104 may be attached to, formed on, or embedded within any exterior surface of the vehicle 102 that is likely to be in view of the pedestrian 116. For example, the system 104 can be integrated in a panel, a bumper, a side mirror, a headlight, or any other vehicle component (e.g., housing) that is visible from one or more viewing angles from outside the vehicle 102.

The system 104 includes an indicator element 108 configured to output different light patterns to visually indicate respective vehicle states. For example, the indicator element 108 may be a light bar, which can include illuminator elements (e.g., LED, LCD, OLED) that can be controlled to produce specific patterns of light. To obtain as much variation in notification ability, the indicator element 108 may be operable to receive input commands that control color (e.g., red, blue, green), intensity (e.g., brightness, size), and/or animation (e.g., blink) of light being emitted from the indicator element 108. Other examples of the indicator element 108 include any other robust light emitting technology that can be integrated with the housing 110, such as light bulbs, displays, and ray tubes.

A housing 110 for the system 104 includes a body portion configured to surround one or more antenna elements (not shown), at least partially, that are positioned on the mounting surface 106 of a vehicle exterior. The body portion of the housing 110 includes walls (e.g., as depicted by the other drawings) that are configured to enclose the antenna elements within a cavity formed between the walls and the vehicle exterior. The housing also provides a mechanical interface for the indicator element 108. This interface is used to maintain an indicator position for the indicator element 108 to be located above the cavity that encloses the antenna elements under the housing 110.

Thirdly, the system includes a transparent cover 112. The transparent cover 112 includes a transparent surface configured to attach to the body portion of the housing 110 at body regions that surround the mechanical interface. This configures the system 104 to form a seal that surrounds the mechanical interface and the indicator element 108 under the transparent cover 112. In some cases, the transparent cover 112 and the indicator element 108 represent a single piece with the indicator element 108 protected under the transparent cover 112 as one unit. This single piece can be paired with the housing 110 (e.g., by placing the single piece cover and indicator element in the mechanical interface of the housing) with a fixture, adhesive, pressure fitting, or other connection means. O-rings, gaskets, sealants, and other materials and pieces can be used to hermetically seal the indicator element 108 within a protected space under the transparent surface of the transparent cover 112.

With the system 104 integrated in the exterior surface of the vehicle 102, the system 104 can be used to output visible notifications that are likely to catch the attention of actors, such as the pedestrian, located outside the vehicle 102. The vehicle 102 includes one or more vehicle systems 114 with an interface to the antenna elements and/or the indicator element 108. The vehicle systems 114 can transmit or receive signals that propagate to the antenna elements located under the housing 110 (e.g., to receive an over-the-air (OTA) update to software or firmware). The vehicle systems 114 may control the indicator element 108 by sending commands that produce different light patterns to convey different information about the signal transmission occurring with the antenna. Same or different vehicle systems 114 may interface with the system 104 simultaneously, including for different purposes. For example, a radar of the vehicle systems 114 may operate the antenna elements to send or receive radar signals. A vehicle controller may operate the indicator element 108 to convey information about the radar operations being performed. However, the vehicle controller may operate the indicator element 108 to convey information about non-radar functions or non-radar vehicle states associated with the vehicle systems 114.

### EXAMPLE VEHICLE CONFIGURATION

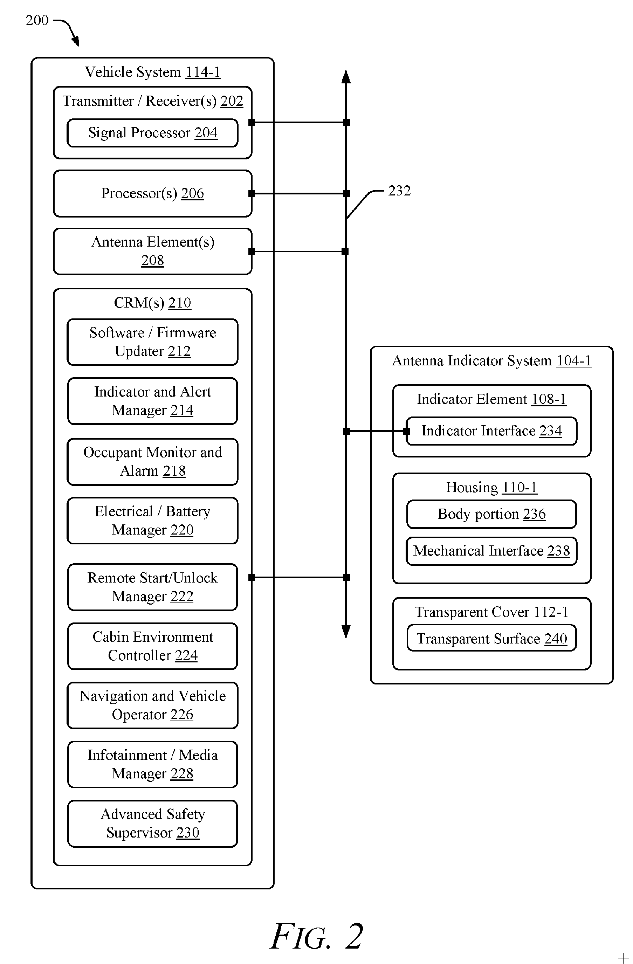

FIG. 2 illustrates an example configuration of a vehicle 200 with an integrated vehicle antenna and indicator system. The vehicle 200 is an example of the vehicle 102, which in this example includes a vehicle system 114-1, which is a generic example of one or more combinations of the vehicle systems 114. The vehicle system 114-1 can include a radar system, a satellite positioning system, a radio, a control system, a multiple sensor system, a controller, a control unit, an electronic control unit (ECU), or another component for the vehicle 200.

The vehicle 200 includes a link 232 (e.g., wired/wireless link, bundle, bus, network path, transmission path, route, optical link) that operatively and/or communicatively couples various parts of the vehicle system 114-1 to various components internal or external to the vehicle 200. For example, components of the vehicle system 114-1 are operatively coupled via the link 232 to an integrated vehicle antenna and indicator system 104-1, which is an example of the system 104. Each component of the vehicle system 114-1 may maintain a direct or indirect connection to the link 232

The vehicle system 114-1 includes a transmitter / receiver 202, which uses a signal processor 204, to send or receive data on the link 232. A processor 206 and antenna elements 208 are also part of the vehicle system 114-1, in addition to a computer-readable media (CRM) 210. The antenna elements 208 transmit signals (e.g., radar, communication) based on data exchanged over a direct path shared on the link 232 between the signal processor 204 and the antenna elements 208. The processor 206 and the CRM may have indirect paths to the antenna elements 208; the signal processor 204 may output the raw data exchanged with the antenna elements 208, or a processed form of that data (e.g., a data cube, a detection list, a track list) via a path shared on the link 232 between the signal processor 204 and the processor 206 and/or the CRM 210.

Stored as executable instructions, the CRM 210, may retain data and instructions associated with one or more software or firmware units, including modules, scripts, executables, programs, and the like, that are installed on the vehicle 102. Although depicted as being stored within the CRM 210, the executable units or modules located on the vehicle 200 may be executable instructions stored on the CRM 210, implemented alone or in combination with various programmable hardware. The CRM 210 represents a memory or storage device configured to maintain executable instructions and/or data. As some examples of executable instruction units that may be maintained on the CRM 210, the CRM 210 is depicted with a software/firmware updater 212 configured to initiate or execute remote installation of software and firmware upgrades to the vehicle systems 114-1. Also maintained in the CRM 210 may be an indicator and alert manager 214 configured to trigger a theft protection countermeasure, an occupant monitor and alarm 218 configured to monitor for occupants left in the vehicle 102 after a driver exits, and an electrical/battery manager 220 configured to monitor and report progress in charging or provide estimated range given current charge status. The CRM 210 may include a remote start/unlock manager 222 configured to connect to the internet or a key fob, a cabin environment controller 224 configured to monitor temperature or control Heat Ventilation Air Condition (HVAC) systems, a navigation and vehicle operator 226 configured to perform autonomous or semi-autonomous controls, an infotainment/media manager 228 configured to obtain and play media on the vehicle 200, and an advanced safety supervisor 230 configured to activate countermeasures to prevent collisions or unsafe driving situations with the vehicle 200.

The system 104-1 includes an indicator element 108-1, a housing 110-1, and a transparent cover 112-1, which are examples of corresponding components from the system 104 depicted in FIG. 1. The indicator element 108-1 includes an indicator interface 234. The indicator interface 234 is configured to receive control inputs (e.g., via the link 232) for causing different light patterns to be output from the indicator element 108. The indicator control commands that are output to the indicator interface 234 may cause different corresponding light patterns. Each of the different light patterns output in response to the control commands received at the indicator interface 324 may correspond to a unique combination of light color, light intensity, and/or light animation, for indicating that respective vehicle state. When output from the indicator element 108-1, each of the different light patterns corresponds to a unique combination of at least one of light color, light intensity, or light animation for that vehicle state.

When provided to the indicator interface 234, the indicator control commands cause the indicator element 108-1 to illuminate a visual notification that emits specific pattern of lights associated with that command. The processor 206 and the CRM 210 may have direct paths to the indicator interface 234 through the link 232 such that the processor 206 may send execute instructions stored on the CRM 210, and in response, generate indicator control commands for the indicator interface 234 to provide visual notifications of a software update progress or other vehicle state associated with instructions executed by the processor 206 at that time.

The housing 110-1 includes a body portion 236 and a mechanical interface 238. An exterior surface of the housing 110-1 may have a solid finish including a color that matches the vehicle exterior. The purpose of the body portion 236 is to configure the housing 110-1 to, at least partially, surround the antenna elements 208, which are positioned on the mounting surface 106 of a vehicle exterior. The body portion 236 includes walls that are configured to enclose the antenna elements 208 within a cavity formed between the walls and the mounting surface 106 of the vehicle exterior to provide environmental protection and an aesthetic design to the antenna elements 208. The body portion 236 is designed to improve performance of the antenna elements 208, rather than interfere with their capability. For example, the walls of the housing 110-1 within the body portion 236 are transparent to signals transmitted or received via the antenna elements 208. The exterior surface of the housing 110-1 may be formed from materials that are opaque to visible light, but transparent to electromagnetic signals, sound signals, or other signals based on non-visible light.

The housing 110-1 provides the mechanical interface 238 for the indicator element 108-1, which is configured to maintain an indicator position of the indicator element 108-1 to be positioned above the cavity that encloses the antenna elements

The transparent cover 112-1 includes a transparent surface 240. The transparent surface 240 is formed of a material that is at least semi-transparent to visible light. Unlike a different material used for an exterior surface of the housing 110-1, which may be opaque to visible light, the material of the transparent surface 240 is selected to promote illumination from the indicator element 108-1 that is positioned underneath the transparent cover 112-1 and generating the different patterns of light. The transparent cover 112-1 may include a filter, a tint, or other feature that configures the transparent surface 240 to permit certain wavelengths of visible light and prevent other types of visible light. For example, rather than being clear and transparent to all visible light, the transparent surface 240 may appear dark in color in day light when the indicator element 108-1 is not enabled (e.g., not outputting light). In contrast, when the indicator element 108-1 provides illumination, the light output from the indicator element 108-1 can still be clearly viewed (e.g., even at a distance from the vehicle 200) through the transparent surface 240, which in this example is a semi-transparent (e.g., tinted) surface to preserve aesthetic appeal when the indicator element 108-1 is not in use.

It should be understood that the transparent cover 112-1, the transparent surface 240, and the indicator element 108-1 are designed to not interfere with operations of the external devices (e.g., the antenna elements 208) housed beneath them under the housing 110-1. For example, activation of the indicator element 108-1 to output a visual notification of the state of the vehicle 200 may be limited to circumstances when the antenna elements 208 are not in use. When the vehicle 200 is operating on a road, the antenna elements 208 may be transmitting or receiving signals to support driving functions. To prevent interference with their operation, the system 104-1 includes components, including the indicator element 108-1, the transparent cover 112-1, and the housing 110-1 that do not affect these operations. That is, the transparent cover 112-1 and the indicator element 108-1 may be selected to be as transparent as possible to the types of signals expected to be transmitted or received with the antenna elements 208. The antenna elements 208 may provide a particular field of view for sending or receiving signals around the vehicle 200. This field of view may not be limited or reduced when the housing 110-1 is seated on the mounting surface 106 and covers the antenna elements 208. A small reduction in performance may be acceptable, however, through calibration of the vehicle system 114-1 and selection of different materials, the system 104-1 can be designed to operate with the vehicle 200 and the vehicle system 114-1 to minimize any performance lost.

### EXAMPLE DESIGN

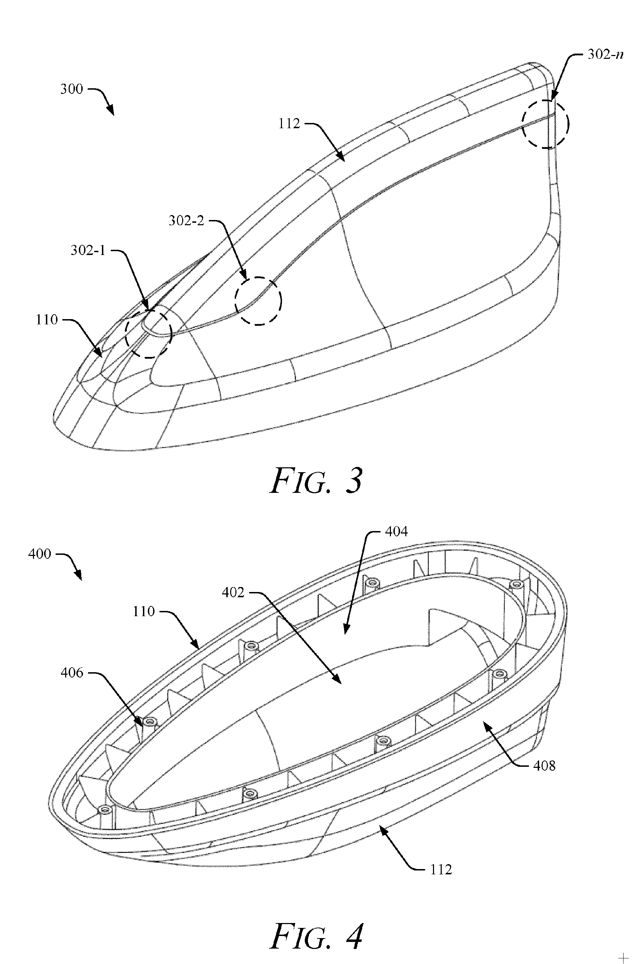

FIGS. 3 and 4 illustrate isometric views of an example integrated vehicle antenna and indicator system. The FIGS. 3 and 4 are described in the context of the systems 104 and 104-1.

FIG. 3 shows an isometric top-down view 300 of the system 104, which from the view 300 clearly depicts the housing 110 and the transparent cover 112. The indicator element 108 is not shown in the view 300 because it is covered by the transparent cover 112.

The system 104 has an overall shape provided when the transparent cover 112 is mated to the housing 110. In this example, the overall shape is a shark fin shape of a common automotive roof mounted antenna housing. The overall shape can be any housing shape, so long as the system 104 can provide a cavity to enclose components contained on a vehicle and can maintain the indicator element 108 near a prominent or recognizable feature of that shape. In this example, the transparent cover 112 includes a transparent surface that defines a ridge for the shark fin shape. This way, when the indicator element 108 outputs notifications using different light patterns, the notifications are illuminated near features of the vehicle 102 that are recognizable from a distance outside the vehicle 102.

Highlighted in FIG. 3 are areas where the housing 110 meets or contacts the transparent cover. Transparent cover 112 is configured to contact the housing 110 at one or more body regions 302 (e.g., body region 302-1, body region 302-2, ..., body region 302-n). For example, the transparent cover 112 includes an edge that contacts to the body regions 302. The edge can be a perimeter or outer edge that is configured to fit the transparent cover 112 within an attachment region of the housing 110 (e.g., the mechanical interface 238) to support and retain the transparent cover 112 in place. At the body regions 302, an exterior surface of the housing 110 is contoured to match the transparent surface of the transparent cover 112. The housing 110 and the transparent cover 112, when combined, provide the overall shape for the exterior of the system 104. In this case, the transparent cover 112 provides a ridge atop a lower portion of the shark fin defined by the housing 110.

FIG. 4 shows an isometric bottom-up view 400 of the system 104. From the view 400, the housing 110 and the transparent cover 112 are visible; the indicator element 108 is sealed between the housing 110 and the transparent cover 112 therefore not visible from the view 400.

The system 104 is shown being configured to enclose an exterior component within a cavity 402 formed under the system 104 when the housing 110 is attached to the mounting surface 106 of the vehicle 102. One or more types of attachment features 406 may be used to secure the housing 110 to the mounting surface 106. The attachment features 406 may be screw holes or post holes as shown, or any other type of attachment fixture, adhesive, or material that can maintain contact with the mounting surface 106.

The system 104 is attached to the mounting surface 106 such that walls 404 formed by the housing 110, at least partially, surround and enclose the exterior component. The walls 404 may be solid or hollow, such as with support members for structure and rigidity, or in other cases, a solid material throughout. The walls 404 are configured to seal the component within the cavity 402 formed after being attached to the mounting surface 106.

The walls 404 can be referred to as inner walls, which retain an inside dimension for the cavity 402 and the system 104. An exterior surface 408 of the housing 110 is opposite the walls 404 and an inner surface of the cavity 402 that is provided by the walls 404. The exterior surface 408 has a contour that is shaped to be consistent with an overall shape or design of the vehicle 102. That is, the contour of the exterior surface 408 is shaped to continue, extend, or otherwise compliment a shape of contour of the transparent surface of the transparent cover 112. The shaping of their surfaces to match provides the system 104 with an overall shape (e.g., the shark fin shape). In other words, the housing 110 has ornamental design features on the exterior surface 408 to maintain an aesthetic appearance on the vehicle 102. On the inside of the housing 110, the walls 404 have functional features that provide the dimensions of the walls 404 and the overall size and shape of the cavity 402. The walls 404 are configured to fit over exterior components (e.g., the antenna elements 208) and maintain contact to the mounting surface 106. To this end, the walls 404 may be shaped to match the mounting surface 106; the attachment features 406 are provided to environmentally seal the cavity 402 to protect the exterior components from weather and debris while promoting functionality (e.g., permitting electromagnetic signals, permitting communication signals, enabling a desired instrumented field of view).

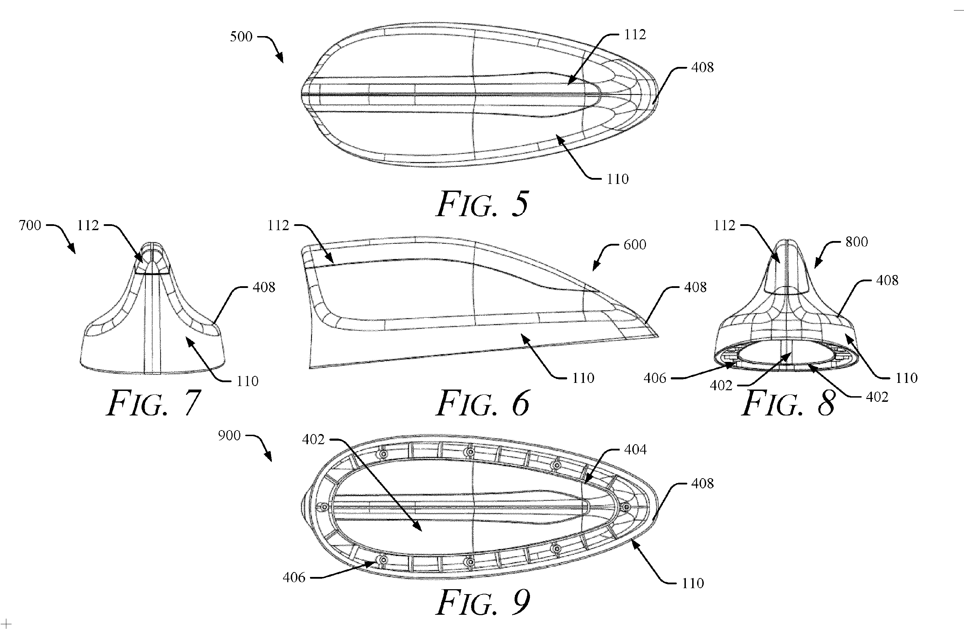

FIGS. 5 to 9 illustrate further perspective views of an example integrated vehicle antenna and indicator system. The FIGS. 5 to 9 are examples of the systems 104 and 104-1 and are described in the context of FIGS. 1 to 4.

Carrying over from the view 400, FIGS. 5 to 9 show the cavity 402, the walls 404, the attachment features 406, and the exterior surface 408 from different viewing angles than the views 300 and 400. FIG. 5 illustrates a top-down perspective view 500 of the system 104 including the transparent cover 112 attached to the housing 110 at the body regions embedded in the exterior surface 408. Attaching the cover 112 to the housing 110 completes an overall shape provided by the exterior surface 408. For example, the contour of the transparent cover 112 is shaped, as is the housing, such that a smooth transition is provided between the transparent cover 112 and the body regions 236 when the cover 112 contacts the housing 110.

FIG. 6 illustrates a side perspective view 600 of the system 104, and FIG. 7 illustrates a rear perspective view 700 of the system 104. The cavity 402, the walls 404, and the attachment features 406 are concealed from the views 600 and 700 by the exterior surface 408 of the housing 110.

FIG. 8 illustrates a front perspective view 800 of the system 104, and FIG. 9 illustrates a bottom-up perspective view 900 of the system 104. The cavity 402, the walls 404, and the attachment features 406 are visible from the views 800 and 900. The exterior surface 408 provides ornamental design features; for functional purposes, the cavity 402 is provided beneath the housing 110 and enclosed by the walls 404. The walls 404 are rigid to maintain an inner dimension, size, and shape of the cavity 402 when the system 104 is placed over exterior components located on the mounting surface 106.

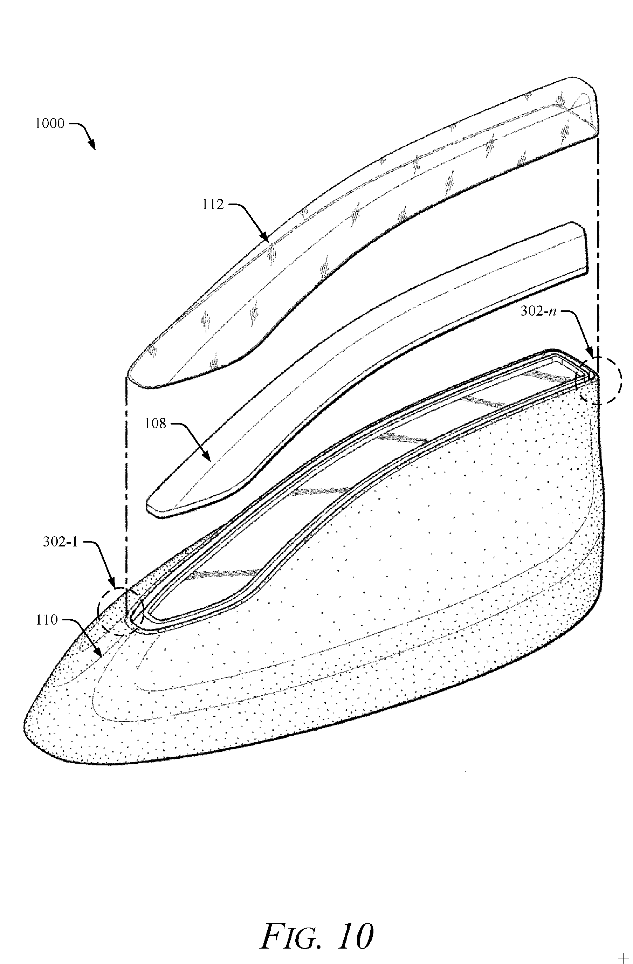

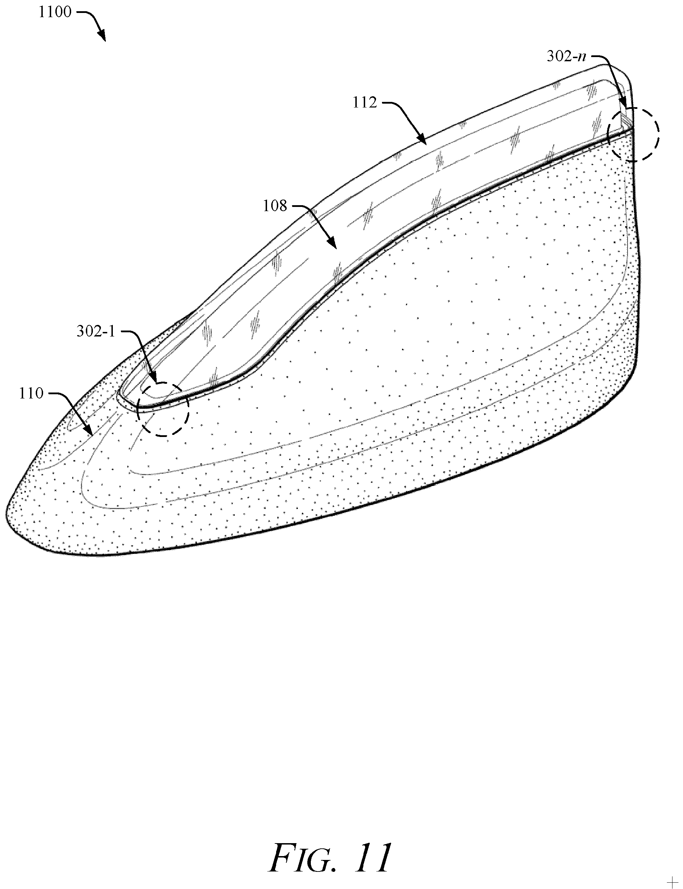

FIGS. 10 and 11 illustrate exploded and isometric views of an integrated vehicle antenna and indicator system assembly. FIG. 10 depicts an exploded view 1000 of the system 104 prior to assembly. The view 1000 shows the transparent cover 112 positioned above the indicator element 108, and the view 1000 depicts the housing 110 positioned beneath the indicator element 108 (e.g., on a side of the indicator element 108 that is opposite the transparent cover 112). This is just one example, and in other examples, the indicator element 108 and the indicator cover 112 may be a single part or component. The indicator element 108 and the indicator cover 112 may be a light bar that is manufactured or sold as a single part having an illumination source under an exterior that is contoured to a same overall shape as the housing 110.

The housing 110 may be shaped differently depending on the type of indicator element and cover used. For instance, the body portion 236, the mechanical interface 238, and/or the housing 110 may have a different size or dimension depending on whether the transparent cover 112 is separate from the indicator element 108 or whether they are a single part. Different configurations of the indicator element 108 and/or the transparent cover 112 can cause adjustments to these dimensions. Further, their size, positions, and shape can be modified for different providing illumination patters as visual notifications that are output near recognizable features of vehicle exteriors.

FIG. 11 depicts an isometric view 1100 of the system 104 after assembly. For example, to assemble the system 104, the indicator element 108, the housing 110, and the transparent cover 112 are arranged relative each other, as shown in the view 1100. The transparent cover 112 is positioned above the housing 110 such that the transparent cover 112 (e.g., an edge of the transparent surface) is aligned to contact the body regions 302 within the housing 110. The body regions 302 are configured to surround the mechanical interface for retaining the indicator element 108 within the housing 110. The indicator element 108 is positioned within the mechanical interface, between the body regions 302. This fixes the indicator element 108 at a desired indicator position within the system 104, which is located beneath the transparent surface of the transparent cover 112 and within the mechanical interface provided by the housing 110.

From the view 1100, the system 104 is shown assembled and ready for installation on the vehicle 102. As made clear from the view 1100, the transparent cover 112 includes a contour that is consistent with an overall shape that is partially defined by a contour of the housing 110. The contour of the transparent cover 112, when combined with the housing 110, may complete the overall shape partially defined by the contour of the housing 110. For example, the housing 110 defines a first part of a contour for an overall shape of the system 104 and the transparent cover 112 provides a second part of that contour. The housing 110 may include a lower portion of an antenna housing or other device housing that is close to the mounting surface 106 on the vehicle 102. At a more visible position on the vehicle 102, the transparent cover 112 includes an upper portion to complete the overall shape and design of the lower portion provided by the housing 110 (e.g., by providing smooth transitions between adjacent surfaces of the housing 110 and the transparent cover 112). This does not mean that the contour of the transparent surface of the transparent cover 112 cannot deviate from the contour of the housing 110 at some areas of the transparent cover 112, which are at a distance from the body regions 302. However, the contour of the transparent cover 112 is formed to have a shape near the edge of the transparent surface that completes or compliments the overall shape provided by the housing 110 over the mechanical interface (e.g., the area of the housing 110 that is located between the body regions 302).

### EXAMPLE PROCESSES

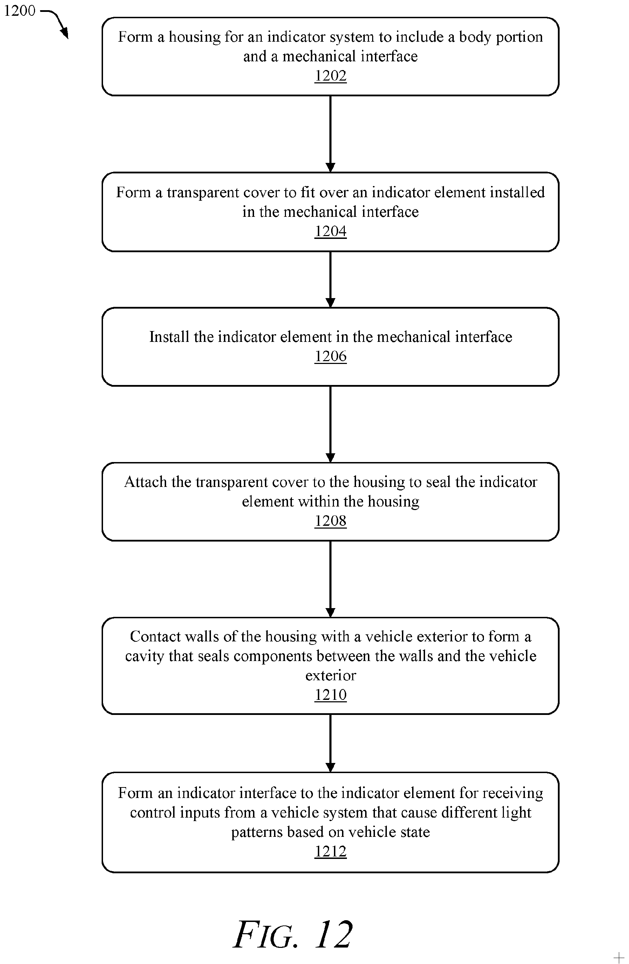

FIG. 12 illustrates a flowchart of an example process for forming an integrated vehicle antenna and indicator system. A process 1200 is described in the context of the systems 104 and 104-1, as referred to above. The process 1200 can be performed to manufacture the system 104 or the system 104-1, including to complete installation on the vehicle 102. For example, a processor may execute instructions that configure tools and equipment in a factory to execute one or more of the steps 1202 to 1212 in furtherance of the process 1200 (e.g., to manufacture parts for installing a shark fin shaped integrated vehicle antenna and indicator system). A factory computer (e.g., a processor, a controller, an ECU) configured to operate manufacturing equipment that performs various steps of the process 1200. The specific order of the steps 1202 to 1212 is just one example order of operations. The process 1200 can be modified for different applications or circumstance (e.g., to suit different manufacturing environments, to adapt to different makes or models of vehicles), which can include adding, omitting, repeating, or reordering steps of the process 1200 to be different than the depiction of the process 1200 from FIG. 12.

At step 1202, a housing is formed for an indicator system to include a body portion and a mechanical interface. For example, the housing 110 is formed using manufacturing equipment to include the body portion 236, which is shaped to, at least partially, surround the antenna elements 208 that are positioned on the mounting surface 106 of a vehicle exterior. In forming the body portion 236, the walls 404 of the housing 110 are formed to enclose the antenna elements 208 within the cavity 402 that is later created from contact between the walls 404 and the mounting surface 106 on the vehicle exterior. The housing 110 is further formed by including the mechanical interface 238, which maintains an indicator position for the indicator element 108 to be located above the cavity 402 and outside the walls 404 of the body portion 236.

Various manufacturing processes can be used to form the housing 110 at the step 1202. For example, injection molding can form the body portion 236 and the mechanical interface 238 to form a single injected molded part. Other manufacturing techniques may be used (e.g., computer controlled cutting or shaping, three-dimensional printing) to form the body portion 236 and the mechanical interface 238 as a single manufactured part, or multiple manufactured parts that are later fit together using mechanical or adhesive features. The transparent cover 112 is formed from a material that is not transparent to visible light, and instead, transparent to the type of signals (e.g., electromagnetic signals, satellite signals, radio signals) that the vehicle systems 114 obtain via the antenna element 208.

At step 1204, a transparent cover is formed to fit over an indicator element installed in the mechanical interface. For example, the transparent cover 112 formed to have a transparent surface that attaches to the body portion 236 at the body regions 302, which surround the mechanical interface 238 to cause a seal for the mechanical interface under the transparent cover. The transparent cover 112 may be formed using techniques like those described for performing the step 1202, or the transparent cover 112 may be formed using other techniques. For example, to create the shape of the transparent cover 112, the manufacturing equipment may perform injection molding, cutting, polishing, and/or treating of the material used to form the transparent cover 112 to have the shape and contour that matches the housing 110. The transparent cover 112 is formed from a material that is transparent to visible light.

At step 1206, the indicator element is installed in the mechanical interface. For example, within the mechanical interface 238, the indicator element 108 is installed to operable from the indicator position provided by the mechanical interface 238. The indicator element 108 is installed to be operable to output different light patterns that visually indicate respective vehicle states as reported from the vehicle systems 114. This can include using adhesive or fixtures to keep the indicator element 108 fixed at that position in the mechanical interface 238 of the housing 110. In some examples, the indicator element is a light bar. The indicator element 108 may be any type of illumination device that can be arranged within the mechanical interface 238.

At step 1208, the transparent cover is attached to the housing to seal the indicator element within the housing. For example, the transparent cover 112 may be positioned adjacent to the mechanical interface 238 of the housing 110 such that an edge of the transparent cover 112 is positioned to contact a physical perimeter or boundary of the mechanical interface 238 (e.g., parts of the housing 110 contact or are nearest the indicator element 108). The transparent cover 112 can be attached to the housing 110 based on a mechanical or adhesive fit between to the body regions 302 of the body portion 236 of the housing 110, to seal the indicator element 108 under the transparent surface and above the mechanical interface 238 of the housing 110.

At this point in the process 1200, the housing 110, the transparent cover 112, and the indicator element 108 form a single assembly that is ready for installation on an exterior of a vehicle. After performing steps 1202 to 1208, the assembly may be ready for subsequent installation in a vehicle, which may occur at another factory or using other manufacturing equipment than that used to form the assembly.

The system 104 may be included in a parts list for manufacturing the vehicle 102. After installing and completing integration of the assembly, as provided in steps 1210 and 1212, the system 104 becomes operational on the vehicle 102.

At step 1210, walls of the housing contact with a vehicle exterior to form a cavity that seals components between the walls and the vehicle exterior. For example, the housing 110 is positioned over the mounting surface 106 such that the transparent cover 112 and the indicator element 108 are oriented to face away from the mounting surface 106. The walls 404 contact the mounting surface 106 on the vehicle exterior to create the cavity 402 that seals the antenna elements 208 between the walls 404 and the vehicle exterior (e.g., the mounting surface 106).

At step 1212, an indicator interface is formed for receiving control inputs from a vehicle system that cause the different light patterns based on the respective vehicle states. For example, the indicator element 108 may be programmed or the vehicle systems 114 may be adapted to interface with the indicator interface 234 that is available via a connection within the vehicle 102 to the link 232. A wire connection from the vehicle 102 may be attached to the indicator element 108. For example, a connection may be formed between the indicator element 108 positioned in the mechanical interface 238 and the indicator interface 234 that is accessible from the link 232. The connection may be wired or wireless. If wired, the connection for the indicator interface 234 may follow any combination of paths that run through the walls 404, within the cavity 402, and/or external to the housing 110.

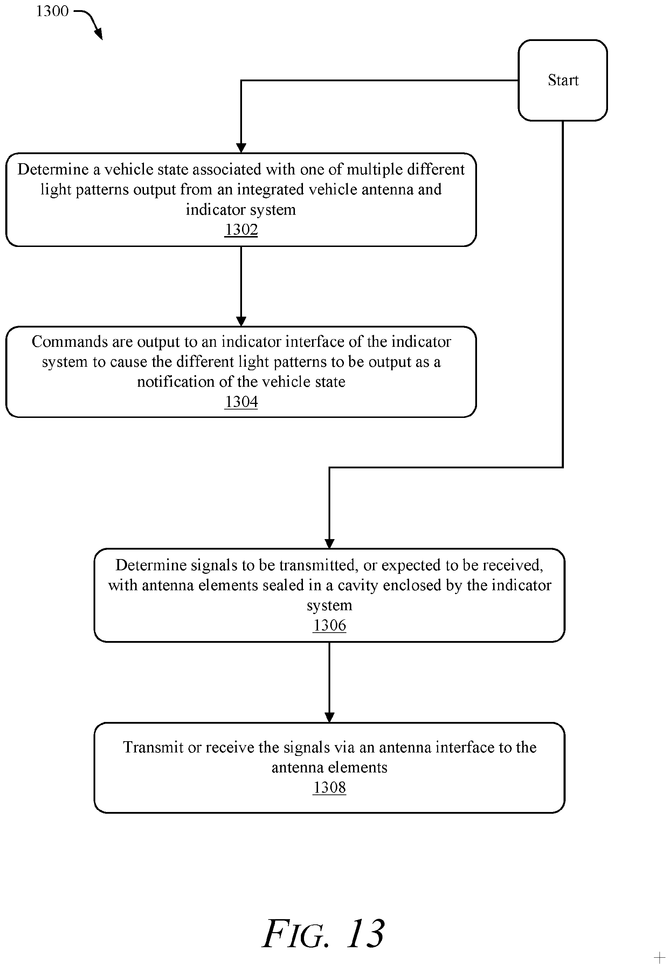

FIG. 13 illustrates a flowchart of an example process for using an integrated vehicle antenna and indicator system. A process 1300 is described in the context of the systems 104 and 104-1, as referred to above. The process 1300 can be performed after components of the system 104 integrated into an assembly that is ready for installation on a vehicle. A processor of the vehicle systems 114 can execute the process 1300 to use the system 104 on the vehicle 102. For example, the processor 206 may execute steps 1302, 1304, or 1306 of the process 1300 depending on a vehicle state of the vehicle 102 and/or the vehicle systems 114. The process 1300 can be modified for different vehicle systems or vehicles, which can include adding, omitting, repeating, or reordering steps of the process 1300 to be different than the depiction of the process 1300 from FIG. 13.

At step 1302, a vehicle state associated with one of multiple different light patterns output from an integrated vehicle antenna and indicator system is determined by at least one vehicle processor (e.g., the processor 206). For example, there may be numerous possible vehicle states to define an operating condition of the vehicle systems 114, the environment 100, and/or the vehicle 102, for a current situation. The vehicle state may indicate progress towards completing a computer related vehicle task (e.g., transferring data) or other vehicle task (e.g., charging, fueling, interior cabin cooling/heating). Examples of the tasks that can be monitored and progress reported on via visual notifications can include one or more of a computing operation, a charging operation, a climate control operation, a remote control operation (e.g., unlocking, locking, starting, stopping), or warning about a hazard condition (e.g., occupant alert for an overheating interior cabin).

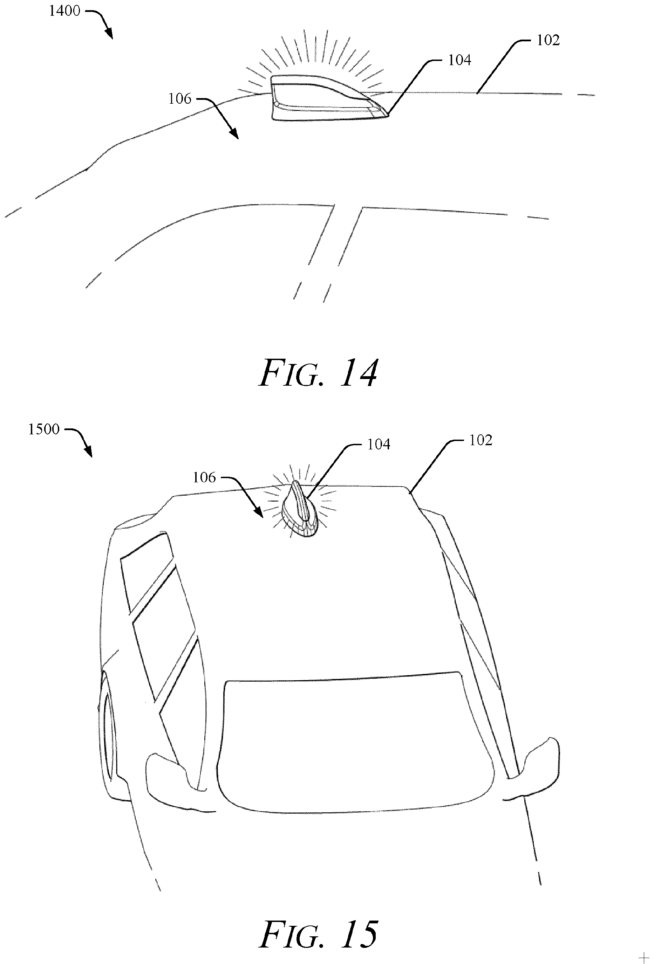

At step 1304, commands are output to an indicator interface of the indicator system to cause the different light patterns to be output as a notification of one of the respective vehicle states (e.g., the vehicle state determined at the step 1304). For example, the processor 206 outputs control commands to the indicator interface 234. The control commands are received by the indicator element 108, which causes one of the different light patterns to be output as a notification that vehicle state. For example, FIGS. 14 and 15 provide examples of the system 104 outputting the visual notification from the indicator element 108 based on control commands the indicator element 108 receives at the indicator interface 234. As one example, the vehicle state may relate to progress for a software update. The visual notification output from the indicator element 108 may transition from having a first color (e.g., red) when the software update is first initiated. When the vehicle state indicates completion of the progress, the visual notification of the output may change to a second color (e.g., green). Various types of vehicle states may be conveyed with notifications output from the indicator element 108. There may be restrictions within the vehicle systems 114 that limit notification ability when the vehicle 102 is moving or not parked. In this way, they can be made not to interfere with other drivers or violate regulations related to driving safety.

At step 1306, signals to be transmitted, or expected to be received, with antenna elements sealed in a cavity enclosed by the indicator system are determined. For example, the signal processor 204 is configured to transmit or receive electromagnetic signals including radio signals, satellite signals, radar signals, and the like, by sending data on the link 232 to configure the vehicle 102 to output signals or receive signals using the antenna elements 208. The system 104 does not interfere with transmission or reception of the signals because the housing 110 is formed using a material that is transparent to their wavelength. For example, a traditional antenna housing may be formed of material that resists corrosion from road weather that has an opaque color (e.g., black, vehicle exterior color to match the mounting surface), which may or may not be painted, to conceal the aesthetics of the antenna elements and/or other external components mounted on a vehicle exterior. Like the material of this traditional housing, the housing 110 can be formed from plastic or other material that is transparent to the type of signals associated with the components (e.g., the antenna elements 208) that are protected by the housing 110.

At step 1308, the signals are transmitted or received via an antenna interface to the antenna elements. For example, the signal processor 204 outputs or receives information over the link 232 that connected to an antenna interface of the antenna elements 208. Via the antenna interface, an indication of the signals to be transmitted or expected to be received is sent to configure the antenna elements 208 for operation on the vehicle 102. Likewise, an indication of the signals received by the antenna elements 208 can be sent over the link 232 by sending the indication to the antenna interface shared with the signal processor 204.

FIGS. 14 and 15 illustrate different perspectives of visual notifications being output from a vehicle exterior using an integrated vehicle antenna and indicator system. FIG. 14 provides a side view 1400 of the system 104, which is attached to an exterior surface (e.g., a roof) of the vehicle 102. FIG. 15 provides an isometric view 1500 of the system 104 that depicts the visible notifications output from the system 104 being visible from other viewing angles about the vehicle 102.

The views 1400 and 1500 show how a recognizable feature of an antenna housing (e.g., a ridge on a shark fin antenna housing) can be replaced with the indicator element 108 and the transparent cover 112 to form the system 104 with the housing 110. These components are shaped and contoured to preserve the original shape of that recognizable feature before it is replaced. With the indicator element 108 integrated in the housing 110 this way, visual notifications can be output from a highly visible and recognizable position associated with an external device that is already on the vehicle 102. By outputting a light pattern as a visual notification output near a recognizable feature of an external device, information conveyed by the notifications is provided in a way that does not detract from aesthetics of a vehicle design and is easily recognizable from outside the vehicle.

### EXAMPLES

In the following section, examples are provided.

Example 1: An integrated vehicle antenna and indicator system, the system comprising: an indicator element configured to output different light patterns to visually indicate respective vehicle states; a housing comprising: a body portion configured to at least partially surround one or more antenna elements positioned on a vehicle exterior including walls of the body portion that are configured to enclose the antenna elements within a cavity formed between the walls and the vehicle exterior; a mechanical interface for the indicator element to maintain an indicator position located above the cavity that encloses the antenna elements; and a transparent cover comprising a transparent surface configured to attach to the body portion at body regions that surround the mechanical interface to seal the mechanical interface and the indicator element under the transparent cover.

Example 2: The system of example 1, wherein at least one of the body portion and the mechanical interface, or the indicator element and the transparent cover, each comprise a single manufactured part.

Example 3: The system of any preceding example, wherein the single manufactured part comprises an injected molded part.

Example 4: The system of any preceding example, wherein the transparent cover is configured to contact the body regions.

Example 5: The system of any preceding example, wherein the transparent cover comprises an edge that contacts to the body regions.

Example 6: The system of any preceding example, wherein the transparent cover comprises a contour consistent with an overall shape partially defined by a contour of the housing.

Example 7: The system of any preceding example, wherein the contour of the transparent cover completes the overall shape partially defined by the contour of the housing.

Example 8: The system of any preceding example, wherein the contour of the transparent cover comprises a smooth transition between the transparent cover and the body regions.

Example 9: The system of any preceding example, wherein the overall shape comprises a fin shape.

Example 10: The system of any preceding example, wherein the fin shape comprise a shark fin shape, and the transparent surface defines a ridge for the shark fin shape.

Example 11: The system of any preceding example, wherein an exterior surface of the housing comprises a color that matches the vehicle exterior.

Example 12: The system of any preceding example, wherein: the transparent surface comprises a material that is at least semi-transparent to visible light; and an exterior surface of the housing comprises a different material that is opaque to visible light.

Example 13: The system of any preceding example, wherein different material is transparent to at least one of: electromagnetic signals, sound signals, or non-visible light.

Example 14: The system of any preceding example, wherein the indicator element comprises a light bar.

Example 15: The system of any preceding example, wherein the indicator element comprises an indicator interface configured to receive control inputs for causing the different light patterns to be output from the indicator element.

Example 16: The system of any preceding example, wherein each of the different light patterns corresponds to a unique combination of at least one of light color, light intensity, or light animation for that vehicle state.

Example 17: The system of any preceding example, wherein the walls of the housing are transparent to signals transmitted or received via the antenna elements.

Example 18: A method comprising forming the system of any preceding example.

Example 19: The method of any preceding example, the method comprising: forming, using manufacturing equipment, a housing including: forming a body portion shaped to at least partially surround one or more antenna elements positioned on a vehicle exterior including by forming walls to enclose the antenna elements within a cavity created by contact between the walls and the vehicle exterior; and forming a mechanical interface that maintain an indicator position located above the cavity; forming a transparent cover to have a transparent surface that attaches to the body portion at body regions that surround the mechanical interface to seal the mechanical interface under the transparent cover; installing, within the mechanical interface, an indicator element operable from the indicator position to output different light patterns that visually indicate respective vehicle states; attaching the transparent cover to the body regions to seal the indicator element under the transparent surface.

Example 20: The method of any preceding example, further comprising: contacting the walls with the vehicle exterior to create the cavity that seals the antenna elements between the walls and the vehicle exterior; and forming an indicator interface for receiving control inputs from a vehicle system that cause the different light patterns based on the respective vehicle states.

Example 21: A method comprising using the system of any preceding example.

Example 22: The method of any preceding example, further comprising: outputting, by at least one vehicle processor, commands to the indicator interface to cause one of the different light patterns to be output as a notification of one of the respective vehicle states, each of the vehicle states indicating progress towards completing at least one of: a computing operation, a charging operation, a climate control operation, a remote control operation, or warning about a hazard condition; and transmitting or receiving, by the vehicle processor, signals using an antenna interface to the antenna elements.

Example 23: A system comprising one or more processors configured to perform the method of any preceding example.

Example 24: A computer-readable storage medium comprising computer-executable instructions that, when executed, cause a processor to perform the method of any preceding example.

### CONCLUSION

While various embodiments of the disclosure are described in the foregoing description and shown in the drawings, it is to be understood that this disclosure is not limited thereto but may be variously embodied to practice within the scope of the following claims. From the foregoing description, it will be apparent that various changes may be made without departing from the scope of the disclosure as defined by the following claims.

## Claims

1. An integrated vehicle antenna and indicator system, the system comprising:
an indicator element configured to output different light patterns to visually indicate respective vehicle states;
a housing comprising:
a body portion configured to at least partially surround one or more antenna elements positioned on a vehicle exterior including walls of the body portion that are configured to enclose the antenna elements within a cavity formed between the walls and the vehicle exterior;
a mechanical interface for the indicator element to maintain an indicator position located above the cavity that encloses the antenna elements; and
a transparent cover comprising a transparent surface configured to attach to the body portion at body regions that surround the mechanical interface to seal the mechanical interface and the indicator element under the transparent cover.

2. The system of claim 1, wherein at least one of the body portion and the mechanical interface, or the indicator element and the transparent cover, each comprise a single manufactured part, that in particular comprises an injected molded part.

3. The system of claim 1 or 2, wherein the transparent cover is configured to contact the body regions, wherein the transparent cover in particular comprises an edge that contacts to the body regions.

4. The system of any one of the preceding claims, wherein the transparent cover comprises a contour consistent with an overall shape partially defined by a contour of the housing.

5. The system of claim 4, wherein the contour of the transparent cover completes the overall shape partially defined by the contour of the housing and/or wherein the contour of the transparent cover comprises a smooth transition between the transparent cover and the body regions.

6. The system of any one of claims 4 or 5, wherein the overall shape comprises a fin shape, wherein the fin shape in particular comprise a shark fin shape, and the transparent surface defines a ridge for the shark fin shape.

7. The system of any one of the preceding claims, wherein an exterior surface of the housing comprises a color that matches the vehicle exterior.

8. The system of any one of the preceding claims, wherein:
the transparent surface comprises a material that is at least semi-transparent to visible light; and
an exterior surface of the housing comprises a different material that is opaque to visible light, wherein the different material is transparent to at least one of: electromagnetic signals, sound signals, or non-visible light.

9. The system of any one of the preceding claims, wherein the indicator element comprises a light bar.

10. The system of any one of the preceding claims, wherein the indicator element comprises an indicator interface configured to receive control inputs for causing the different light patterns to be output from the indicator element.

11. The system of any one of the preceding claims, wherein each of the different light patterns corresponds to a unique combination of at least one of light color, light intensity, or light animation for that vehicle state.

12. The system of any one of the preceding claims, wherein the walls of the housing are transparent to signals transmitted or received via the antenna elements.

13. A method comprising:
forming, using manufacturing equipment, a housing including:
forming a body portion shaped to at least partially surround one or more antenna elements positioned on a vehicle exterior including by forming walls to enclose the antenna elements within a cavity created by contact between the walls and the vehicle exterior; and
forming a mechanical interface that maintain an indicator position located above the cavity;
forming a transparent cover to have a transparent surface that attaches to the body portion at body regions that surround the mechanical interface to seal the mechanical interface under the transparent cover;
installing, within the mechanical interface, an indicator element operable from the indicator position to output different light patterns that visually indicate respective vehicle states;
attaching the transparent cover to the body regions to seal the indicator element under the transparent surface.

14. The method of claim 13, further comprising:
contacting the walls with the vehicle exterior to create the cavity that seals the antenna elements between the walls and the vehicle exterior; and
forming an indicator interface for receiving control inputs from a vehicle system that cause the different light patterns based on the respective vehicle states.

15. The method of claim 13 or 14, further comprising:
outputting, by at least one vehicle processor, commands to the indicator interface to cause one of the different light patterns to be output as a notification of one of the respective vehicle states, each of the vehicle states indicating progress towards completing at least one of: a computing operation, a charging operation, a climate control operation, a remote control operation, or warning about a hazard condition; and
transmitting or receiving, by the vehicle processor, signals using an antenna interface to the antenna elements.
